(19) Europäisches Patentamt
European Patent Office
Office européen des brevets

(11) Veröffentlichungsnummer: **0 424 750 A2**

(12) **EUROPÄISCHE PATENTANMELDUNG**

(21) Anmeldenummer: **90119570.1**

(22) Anmeldetag: **12.10.90**

(51) Int. Cl.5: **C08G 65/32**, C08G 18/67, C08G 18/71

(30) Priorität: **21.10.89 DE 3935138**

(43) Veröffentlichungstag der Anmeldung: **02.05.91 Patentblatt 91/18**

(84) Benannte Vertragsstaaten: **BE DE ES FR GB GR IT NL**

(71) Anmelder: **HOECHST AKTIENGESELLSCHAFT**
**Postfach 80 03 20**
**W-6230 Frankfurt am Main 80(DE)**

(72) Erfinder: **Huth, Hans-Ullrich, Dr.**
**Finkenweg 6**
**W-6073 Egelsbach(DE)**

(54) **Ethylenisch ungesättigte, grenzflächenaktive Urethanderivate und Verfahren zu ihrer Herstellung.**

(57) Ethylenisch ungesättigte, grenzflächenaktive Urethanderivate, hergestellt durch Umsetzung von Alkyl-, Aryl-, Aralkyl- oder Cycloalkylmonoisocyanaten mit Hydroxypolyoxyalkylenoxycarbonylalkenen oder mit N-(Hydroxypolyoxyalkylen)-alkencarboxyamiden in Abwesenheit von Wasser in Substanz oder in inerten organischen Lösungsmitteln oder gegebenenfalls auch in sogenannten Reaktivverdünnern, das sind unter den Umsetzungsbedingungen sich inert verhaltende copolymerisationsfähige ethylenisch ungesättigte monomere Verbindungen, wie z.B. Vinylester, Vinylaromaten, (Meth-)Acrylester.

Die erfindungsgemäß hergestellten Urethanderivate sind in ihrer monomeren Form grenzflächenaktiv und stellen in den meisten Fällen feste oder wachsartige oder hochviskose Produkte dar. Ihre Löslichkeiten in Wasser bzw. in inerten organischen Lösungsmitteln oder inerten Reaktivverdünnern hängen stark vom Aufbau und der Größe der Polyalkylenoxydreste sowie der Größe des hydrophoben Restes am N-Atom der Urethangruppe ab, so daß erfindungsgemäß sowohl gut wasserlösliche als auch in inerten organischen Lösungsmitteln gut lösliche monomere Urethanderivate erhalten werden können. Diese sind über ihre ethylenisch ungesättigten Acyloxy- bzw. Acylamidoreste polymerisationsfähig bzw. copolymerisationsfähig und können durch radikalisch initiierte Polymerisation bzw. Copolymerisation vielseitig zur Herstellung von Polymerisaten bzw. Copolymerisaten verwendet werden.

EP 0 424 750 A2

Xerox Copy Centre

# ETHYLENISCH UNGESÄTTIGTE, GRENZFLÄCHENAKTIVE URETHANDERIVATE UND VERFAHREN ZU IHRER HERSTELLUNG

Die Erfindung betrifft ethylenisch ungesättigte, grenzflächenaktive Urethanderivate, insbesondere Urethanderivate mit (Meth-)Acrylester- oder (Meth-)Acrylamidgruppen, die teilweise interessante und vorteilhafte Löslichkeiten in Wasser und/oder organischen Lösungsmitteln aufweisen und sich u. a. radikalisch polymerisieren bzw. copolymerisieren lassen, sowie Verfahren zu ihrer Herstellung.

Aus der EP-OS 197635 ist die Herstellung von ethylenisch ungesättigten grenzflächenaktiven Urethanderivaten mit Alkoxy(poly)alkylenglykoletherresten bekannt, bei denen die Urethangruppe an ihrem Carboxyrest durch einen Alkoxy(poly)alkylenglykoletheralkoxyrest und an ihrem N-Atom durch einen ethylenisch ungesättigten Carbonsäureesteralkylrest substituiert ist, so daß die Urethangruppe das Bindeglied darstellt zwischen dem ethylenisch ungesättigten Carbonsäureesteralkylrest und dem Alkoxy(poly)-alkylenglykoletherrest. Als einzige Verwendung für die beschriebenen grenzflächenaktiven Urethanderivate ist ihr Einsatz als Comonomere mit 1 bis 25 Gew.-% Anteil an der Gesamtmonomerenmenge zur Herstellung von Copolymerisatdispersionen genannt, die nach Neutralisation der durch ihren Carboxylgruppengehalt anionischen Copolymerisate in den verschiedensten und gegebenenfalls elektrolythaltigen wäßrigen Zubereitungen bei alkalischen pH-Werten als Verdicker wirksam sein können. Homopolymerisate der genannten grenzflächenaktiven Urethanderivate sind nicht bekannt und die monomeren Verbindungen scheinen in Wasser keine nennenswerten Löslichkeiten zu besitzen, da sie in den Beispielen der Emulsionscopolymerisation stets in wäßriger Dispersion als Comonomere eingesetzt werden. Auch in den mitverwendeten comonomeren Vinylverbindungen scheinen sich die genannten Urethanmonomeren nicht nennenswert zu lösen, da sie in keinem der Beispiele in comonomerer Lösung zur Copolymerisation eingesetzt werden.

Es wurden nun überraschenderweise Urethanderivate mit ethylenisch ungesättigten Carboxy- oder Carbamidresten gefunden, die mäßige bis gute Löslichkeiten in Wasser und/oder in organischen Lösungsmitteln aufweisen, die polymerisationsfähig und copolymerisationsfähig sind und sich vorteilhaft und vielseitig, beispielsweise zur Herstellung von Polymerisaten oder Copolymerisaten, verwenden lassen.

Gegenstand der Erfindung sind daher ethylenisch ungesättigte, grenzflächenaktive Urethanderivate der Formel I,

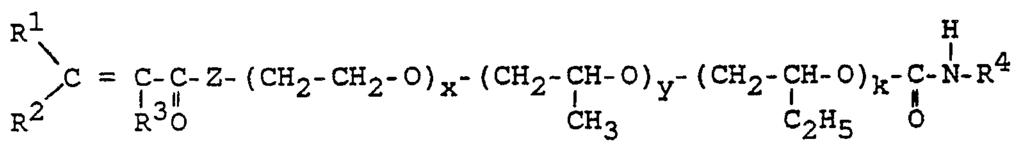

(I)

worin die Reste $R^1$ bis $R^4$ und Z sowie die Zahlenindices x, y und k folgendes bedeuten:
$R^1$,$R^2$,$R^3$, die gleich oder verschieden sein können, = H, $-CH_3$, -COOH, $-CH_2$-COOH, vorzugsweise H, $-CH_3$,
Z = Sauerstoff oder NH, vorzugsweise Sauerstoff,
x,y,k, die gleich oder verschieden sein können, bei Z = NH für eine Zahl von 0 bis 100 stehen mit der Maßgabe, daß $x+y+k \geq 2$, vorzugsweise $x+y$ = 2 bis 30 bei k = 0, oder
bei Z = Sauerstoff für eine Zahl von 1 bis 100 stehen mit der Maßgabe, daß $x+y+k \geq 3$, vorzugsweise $x+y+k$ = 3 bis 30 bei k = 1,
$R^4$ = gegebenenfalls substituiertes ($C_1$-$C_{30}$)-Alkyl, vorzugsweise ($C_1$-$C_{18}$)-Alkyl, gegebenenfalls substituiertes ($C_6$-$C_{10}$)-Aryl, gegebenenfalls substituiertes ($C_7$-$C_{30}$)-Aralkyl, gegebenenfalls substituiertes ($C_5$-$C_8$)-Cycloalkyl, einen gegebenenfalls substituierten 5- bis 7-gliedrigen Heterocyclus.

Besonders bevorzugte Urethanderivate sind ferner solche, bei denen in Formel I $R^1$, $R^2$ = H, $R^3$ = $-CH_3$ oder $R^1$, $R^3$ = H, $R^2$ = $-CH_3$, Z = Sauerstoff und $x+y+k$ = 3 bis 30 bei k = 1 bedeutet.

Gegenstand der Erfindung ist ferner ein Verfahren zur Herstellung von ethylenisch ungesättigten, grenzflächenaktiven Urethanderivaten der Formel I,

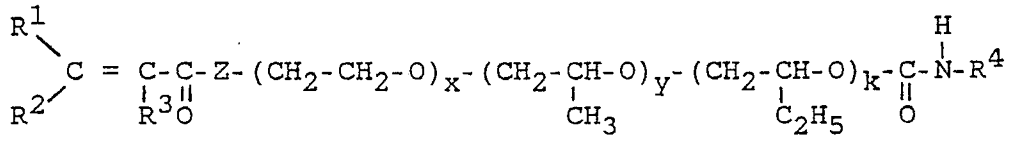 (I)

worin $R^1$ bis $R^4$, Z, x, y und k die vorstehend genannten Bedeutungen haben, durch Umsetzung von Isocyanaten mit Hydroxypolyoxyalkylenoxycarbonylalkenen oder mit N-(Hydroxypolyoxyalkylen)-alkencarboxamiden, indem man Isocyanate der Formel II,

$R^4$ - NCO (II),

worin $R^4$ die Bedeutung wie in Formel I hat, mit äquimolaren Mengen von Hydroxyverbindungen der Formel III,

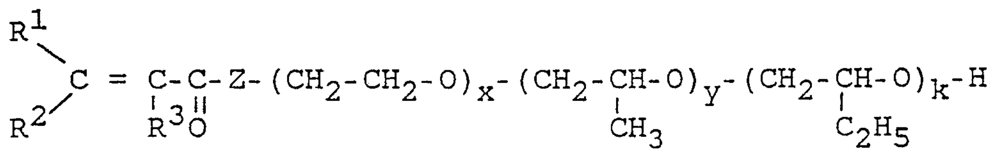 (III)

worin $R^1$, $R^2$, $R^3$, Z, x, y und k die Bedeutung wie in Formel I haben, umsetzt.

Bevorzugte Verbindungen der Formel III sind Polyalkylenglykolmonoester von ethylenisch ungesättigten Carbonsäuren, vorzugsweise von Acrylsäure, Methacrylsäure oder Crotonsäure.

Die Durchführung des Verfahrens erfolgt erfindungsgemäß bevorzugt in der Weise, daß man die Umsetzungen in Substanz oder in inerten organischen Lösungsmitteln oder gegebenenfalls in unter den Umsetzungsbedingungen sich inert verhaltenden copolymerisationsfähigen ethylenisch ungesättigten Monomeren (Reaktivverdünner) in Abwesenheit von Wasser, vorzugsweise bei Temperaturen zwischen 0 °C und Raumtemperatur, oder bei einer höheren Temperatur, vorzugsweise bis zu 60 °C, durchführt.

Als inerte organische Lösungsmittel kommen die bei organischen Synthesen mit Isocyanaten in wasserfreiem Medium üblicherweise verwendeten inerten Lösungsmittel zur Anwendung, sofern sie u.a. die Erfordernisse hinsichtlich Lösewirkung und Siedebereich erfüllen können.

Bevorzugte inerte Lösungsmittel sind z.B. Toluol, Tetrahydrofuran (THF), Ethylacetat und Hexan.

In manchen Fällen können ferner auch sogenannte Reaktivverdünner als Lösungsmittel vorteilhaft sein, das sind copolymerisationsfähige Monomere, die sich unter den Synthesebedingungen der erfindungsgemäßen Urethangruppenbildung inert verhalten, sich aber später unter geeigneten Polymerisationsbedingungen mit den erfindungsgemäßen ungesättigten Urethanderivaten der Formel I copolymerisieren lassen. Bevorzugte inerte Reaktivverdünner sind demzufolge z.B. (Meth-)Acrylsäureester, Styrol und Vinylester, wobei man bei deren Verwendung vorzugsweise unterhalb der Sättigungskonzentration der Reaktanten arbeitet.

Gegebenenfalls wird bei der erfindungsgemäßen Isocyanataddition ein Katalysator mitverwendet, u.a. um die Reaktionstemperatur möglichst niedrig halten zu können, was insbesondere bei der Verwendung von Reaktivverdünnern vorteilhaft sein kann. Bevorzugte Katalysatoren sind organische Zinnverbindungen, die vorzugsweise in einem inerten organischen Lösungsmittel gelöst eingesetzt werden.

Besonders bevorzugt ist die Verwendung von Dibutylzinndilaurat, gegebenenfalls in Kombination mit tert.-Butylbrenzkatechin.

Als Isocyanate der Formel II können insbesondere die üblichen bekannten Alkyl-, Aryl-, Aralkyl- und Cycloalkylmonoisocyanate verwendet werden. Besonders bevorzugt sind z. B. Methylisocyanat, Ethylisocyanat, Butylisocyanat, Nonylisocyanat, Oktadecylisocyanat, Phenylisocyanat, 3-Chlorphenylisocyanat, 3-Toluylisocyanat und Cyclohexylisocyanat.

Die erfindungsgemäß hergestellten Verbindungen der Formel I werden in den meisten Fällen unmittelbar in fester oder wachsartiger oder hochviskoser Form erhalten und können, gegebenfalls nach Eliminierung von mitverwendeten Lösungsmitteln, im allgemeinen ohne weitere Reinigung und Trocknung als Zwischenprodukte weiter verwendet werden. In manchen Fällen fallen Verbindungen der Formel I auch in flüssig-viskoser Form an und können als Zwischenprodukte ebenfalls direkt weiter verwendet werden. Selbstverständlich können die bei dem erfindungsgemäßen Syntheseverfahren anfallenden rohen Reaktionsprodukte auch nach üblichen Methoden, wie z. B. Eluieren, Umkristallisieren, Umfällen und/oder Abdestillieren flüchtiger Bestandteile gegebenenfalls unter vermindertem Druck, gereinigt und die Verbindungen der Formel I in chemisch reiner Form gewonnen werden.

Es hat sich bei Löslichkeitsversuchen u.a. gezeigt, daß die Löslichkeiten von Verbindungen der Formel I eine starke Abhängigkeit von der Größe der Summe aus (x+y+k), vorzugsweise von (x+y), insbesondere von x, zeigen. So ist bei Verbindungen mit kleinem x und (y+k) = 0 oder von x = > (y+k), die Löslichkeit in Wasser meist gegeben und die Verbindungen sind im allgemeinen auch in inerten organischen Lösungsmitteln und in inerten Reaktivverdünnern löslich. Mit abnehmender Größe von x und Zunahme der Größe von (y+k) geht die Löslichkeit der Verbindungen in Wasser zurück.

Dieses variable Löslichkeitsverhalten eröffnet den ethylenisch ungesättigten und grenzflächenaktiven Urethanderivaten der Formel I interessante Verwendungsmöglichkeiten, insbesondere als Comonomere bei Polymerisationen. Es wurde diesbezüglich überraschenderweise gefunden, daß vorzugsweise durch radikalisch initiierte Emulsions- oder Suspensionspolymerisation hergestellte Copolymerisate auf der Basis von ethylenisch ungesättigten Monomeren, die mindestens 1 Gew.-% Monomereinheiten aus Urethanderivaten der Formel I der vorliegenden Erfindung enthalten, unerwartet vorteilhafte Eigenschaften besitzen. Diese Copolymerisate, ihre Verwendbarkeit, insbesondere in Form ihrer wäßrigen Copolymerisatdispersionen als Verdickerpolymerisate in wäßrigen Zubereitungen, sowie ihre Herstellung unter Verwendung monomerer Urethanderivate der Formel I der vorliegenden Erfindung als Ausgangsprodukte sind Gegenstand der am gleichen Tag eingereichten Patentanmeldung HOE 89/F 341 (Az. P 3935137.8 ), auf die hiermit Bezug genommen wird.

Die Erfindung wird durch die nachstehenden Beispiele näher erläutert.

**Beispiele 1 - 10**

Herstellung von Urethanderivaten der Formel I durch Umsetzung äquimolarer Mengen von Ausgangskomponenten der Formeln II und III in Substanz

In einem 0,25 l Vierhalskolben mit Rührer, Thermometer, Tropftrichter und Rückflußkühler mit $CaCl_2$-Endrohr werden in den Beispielen 1 - 8 jeweils 0,2 Mol eines Methacrylsäurepolyalkylenglykolesters des in Tabelle 1 angegebenen Oxalkylierungsgrades (= Anzahl Alkylenoxidäquivalenteinheiten x bzw. y bzw. k) zusammen mit 0,1 g Dibutylzinndilaurat und 0,05 g tert.-Butylbrenzkatechin vorgelegt und jeweils 0,195 Mol eines Monoisocyanats der in Tabelle 1 angegebenen Zusammensetzung innerhalb von ca. 40 Minuten bei Raumtemperatur unter Rühren zugetropft. Anschließend wird die Mischung so lange bei Raumtemperatur weiter gerührt, bis die NCO-Bande im IR-Spektrum des Reaktionsgemisches verschwunden ist (Dauer ca. 20 Stunden). In den Beispielen 9 - 10 werden anstelle von Methacrylsäureestern Crotonsäureester der in Tabelle 1 angegebenen Oxalkylierungsgrade (x, y, k) mit den in Tabelle 1 genannten Monoisocyanaten in gleichen molaren Mengen und in gleicher Weise wie in den Beispielen 1 - 8 umgesetzt.

Die erfindungsgemäßen Urethanderivate der Beispiele 1 - 10 werden in praktisch quantitativer Ausbeute erhalten und stellen helle, wachsartige Produkte dar.

In der Tabelle 1 sind die Ausgangskomponenten der Formeln II und III und die Löslichkeiten (Es bedeuten: (+) = mäßig löslich, + = gut löslich, + + = sehr gut löslich) der erhaltenen erfindungsgemäßen Urethanderivate der Formel I zusammengefaßt wiedergegeben.

**Tabelle 1**

| Beisp. Nr. | Polyalkylenglykolester der Formel III | x bzw. y in Formel III (Mol Alkylenoxideinheiten) | Isocyanate der Formel II | Löslichkeit der erhaltenen Formel I-Verbindungen in Wasser | Ethylacrylat |
|---|---|---|---|---|---|
| 1 | $CH_2=\underset{CH_3}{C}-\overset{O}{\overset{\|}{C}}-O-(CH_2-CH_2-O)_x-H$ | 5 | $C_4H_9NCO$ (Butyl-NCO) | (+) | + |
| 2 | " | 8 | $C_{18}-H_{37}NCO$ (Oktadecyl-NCO) | + | ++ |
| 3 | " | 10 | $CH_3NCO$ (Methyl-NCO) | + | + |
| 4 | " | 8 | $C_6H_{11}NCO$ (Cyclohexyl-NCO) | + | + |
| 5 | " | 20 | $C_6H_5NCO$ (Phenyl-NCO) | ++ | + |
| 6 | $CH_2=\underset{CH_3}{C}-\overset{O}{\overset{\|}{C}}-O-(CH_2-\underset{CH_3}{CH}-O)_y-H$ | 13 | $C_{18}H_{37}NCO$ (Oktadecyl-NCO) | + | + |
| 7 | " | 20 | $C_4H_9NCO$ (Butyl-NCO) | ++ | + |
| 8 | " | 13 | $C_6H_{11}NCO$ (Cyclohexyl-NCO) | + | + |
| 9 | $CH_3-CH=CH-\underset{O}{\underset{\|}{C}}-O-(CH_2-CH_2-O)_x-H$ | 10 | $C_6H_5NCO$ (Phenyl-NCO) | + | ++ |
| 10 | " | 24 | $C_{18}H_{37}NCO$ (Oktadecyl-NCO) | ++ | + |

**Ansprüche**

1. Ethylenisch ungesättigte, grenzflächenaktive Urethanderivate der Formel I,

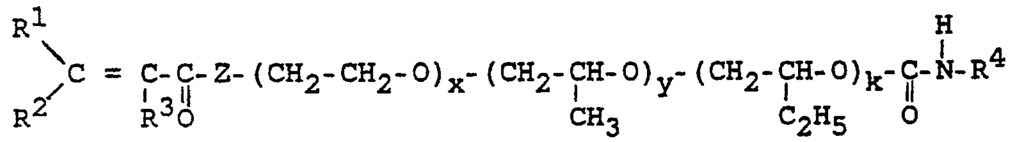 (I)

worin die Reste $R^1$ bis $R^4$ und Z sowie die Zahlenindices x, y und k folgendes bedeuten:
$R^1$,$R^2$,$R^3$, die gleich oder verschieden sein können, = H, $-CH_3$, -COOH, $-CH_2$-COOH, vorzugsweise H, $-CH_3$,
Z = Sauerstoff oder NH, vorzugsweise Sauerstoff,
x,y,k, die gleich oder verschieden sein können, bei Z = NH für eine Zahl von 0 bis 100 stehen mit der Maßgabe, daß $x+y+k \geqq 2$, vorzugsweise $x+y = 2$ bis 30 bei $k = 0$, oder
bei Z = Sauerstoff für eine Zahl von 1 bis 100 stehen mit der Maßgabe, daß $x+y+k \geqq 3$, vorzugsweise $x+y+k = 3$ bis 30 bei $k = 1$,
$R^4$ = gegebenenfalls substituiertes ($C_1$-$C_{30}$)-Alkyl, vorzugsweise ($C_1$-$C_{18}$)-Alkyl, gegebenenfalls substituiertes ($C_6$-$C_{10}$)-Aryl, gegebenenfalls substituiertes ($C_7$-$C_{30}$)-Aralkyl, gegebenenfalls substituiertes ($C_5$-$C_8$)-Cycloalkyl, einen gegebenenfalls substituierten 5- bis 7-gliedrigen Heterocyclus.

2. Urethanderivate nach Anspruch 1, dadurch gekennzeichnet, daß in Formel I $R^1$, $R^2$ = H, $R^3$ = $-CH_3$ oder $R^1$, $R^3$ = H, $R^2$ = $-CH_3$, Z = Sauerstoff und $x+y+k = 3$ bis 30 bei $k = 1$ bedeutet.

3. Verfahren zur Herstellung von ethylenisch ungesättigten, grenzflächenaktiven Urethanderivaten der Formel I nach Anspruch 1 und/oder 2,

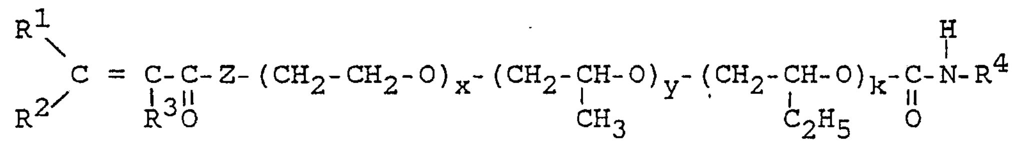 (I)

worin $R^1$ bis $R^4$, Z, x, y und k die Bedeutung wie in Formel I in Anspruch 1 und/oder 2 haben, durch Umsetzung von Isocyanaten mit Hydroxypolyoxyalkylenoxycarbonylalkenen oder mit N-(Hydroxypolyoxyalkylen)-alkencarboxamiden, dadurch gekennzeichnet, daß man Isocyanate der Formel II,
$R^4$ - NCO (II),
worin $R^4$ die Bedeutung wie in Formel I hat, mit äquimolaren Mengen von Hydroxyverbindungen der Formel III,

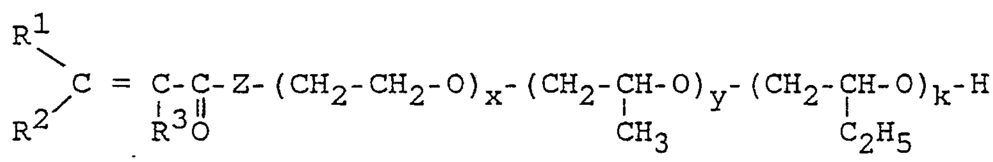 (III)

worin $R^1$, $R^2$, $R^3$, Z, x, y und k die Bedeutung wie in Formel I haben, umsetzt.

4. Verfahren nach Anspruch 3, dadurch gekennzeichnet, daß man die Umsetzung in Substanz oder in inerten organischen Lösungsmitteln bzw. in unter den Umsetzungsbedingungen sich inert verhaltenden copolymerisationfähigen ethylenisch ungesättigten Monomeren in Abwesenheit von Wasser, vorzugsweise bei Temperaturen zwischen 0 °C und Raumtemperatur, oder bei einer höheren Temperatur, durchführt.

5. Verfahren nach Anspruch 3 und/oder 4, dadurch gekennzeichnet, daß man als Verbindungen der Formel III Polyalkylenglykolmonoester von ethylenisch ungesättigten Carbonsäuren, vorzugsweise von Acrylsäure, Methacrylsäure oder Crotonsäure, einsetzt.

Patentansprüche für folgenden Vertragsstaat: ES,GR

1. Verfahren zur Herstellung von ethylenisch ungesättigten, grenzflächenaktiven Urethanderivaten der Formel I,

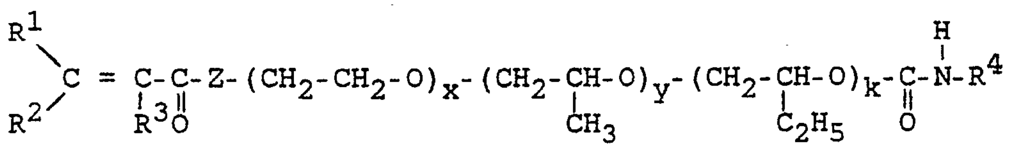 (I)

worin die Reste $R^1$ bis $R^4$ und Z sowie die Zahlenindices x, y und k folgendes bedeuten:
$R^1$,$R^2$,$R^3$, die gleich oder verschieden sein können, = H, $-CH_3$, -COOH, $-CH_2$-COOH, vorzugsweise H, $-CH_3$,
Z = Sauerstoff oder NH, vorzugsweise Sauerstoff,
x,y,k, die gleich oder verschieden sein können, bei Z = NH für eine Zahl von 0 bis 100 stehen mit der Maßgabe, daß $x+y+k \geqq 2$, vorzugsweise $x+y = 2$ bis 30 bei $k = 0$, oder
bei Z = Sauerstoff für eine Zahl von 1 bis 100 stehen mit der Maßgabe, daß $x+y+k \geqq 3$, vorzugsweise $x+y+k = 3$ bis 30 bei $k = 1$,
$R^4$ = gegebenenfalls substituiertes ($C_1$-$C_{30}$)-Alkyl, vorzugsweise ($C_1$-$C_{18}$)-Alkyl, gegebenenfalls substituiertes ($C_6$-$C_{10}$)-Aryl, gegebenenfalls substituiertes ($C_7$-$C_{30}$)-Aralkyl, gegebenenfalls substituiertes ($C_5$-$C_8$)-Cycloalkyl, einen gegebenenfalls substituierten 5- bis 7-gliedrigen Heterocyclus,
durch Umsetzung von Isocyanaten mit Hydroxypolyoxyalkylenalkoxycarboxyalkylenen oder mit Hydroxypolyoxyalkylenamidocarboxyalkylenen, dadurch gekennzeichnet, daß man Isocyanate der Formel II,
$R^4$ - NCO (II),
worin $R^4$ die Bedeutung wie in Formel I hat, mit äquimolaren Mengen von Hydroxyverbindungen der Formel III,

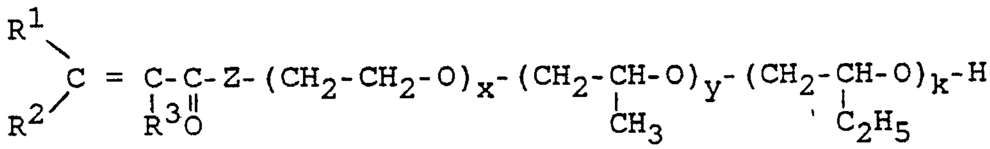 (III)

worin $R^1$, $R^2$, $R^3$, Z, x, y und k die Bedeutung wie in Formel I haben, umsetzt.
2. Verfahren nach Anspruch 1, dadurch gekennzeichnet, daß in Formel I $R^1$, $R^2$ = H, $R^3$ = $-CH_3$ oder $R^1$, $R^3$ = H, $R^2$ = $-CH_3$, Z = Sauerstoff und $x+y+k = 3$ bis 30 bei $k = 1$ bedeutet.
3. Verfahren nach Anspruch 1 oder 2, dadurch gekennzeichnet, daß man die Umsetzung in Substanz oder in inerten organischen Lösungsmitteln bzw. in unter den Umsetzungsbedingungen sich inert verhaltenden copolymerisationfähigen ethylenisch ungesättigten Monomeren in Abwesenheit von Wasser, vorzugsweise bei Temperaturen zwischen 0° C und Raumtemperatur, oder bei einer höheren Temperatur, durchführt.
4. Verfahren nach Ansprüchen 1, 2 oder 3, dadurch gekennzeichnet, daß man als Verbindungen der Formel III Polyalkylenglykolmonoester von ethylenisch ungesättigten Carbonsäuren, vorzugsweise von Acrylsäure, Methacrylsäure oder Crotonsäure, einsetzt.